# EUROPEAN PATENT APPLICATION

(11) **EP 1 226 854 A2**
(43) Date of publication of application: **31.07.2002**
(21) Application number: 02250398.1
(22) Date of filing: 21.01.2002
(51) Int. Cl.: A63F 13/10

(54) **Program execution system comprising program execution device, operational device and display device**

(30) Priority: 24.01.2001 JP 2001016234
(71) Applicant: Sony Computer Entertainment Inc., Tokyo 107-0052 (JP)
(72) Inventor: Takatsuka, Susumu, Minato-ku, Tokyo 107-0052 (JP); Matsumoto, Shingo, Minato-ku, Tokyo 107-0052 (JP); Miyaki, Satoru, Minato-ku, Tokyo 107-0052 (JP)
(74) Representative: Turner, James Arthur

(57) **Abstract**

In the present invention, the user can display an appearance selection screen, select an appearance of a game character to be raised, and confirm movement of the game character having a selected appearance. The user then displays a language setting screen to make setting of a conversation language spoken by the game character. Thus the user can set by himself or herself basic parameters (appearance, personality, etc.) of the game character to be raised, so that the user can enjoy various raising patterns even if the same character is used.

## Description

The present invention relates to a recording medium having recorded therein a program and data used on a program execution system which comprises a program execution device, an operational device and a display device; the game program *per se;* such program execution system; and such program execution device.

There is known an information instrument (entertainment system) such as an entertainment device including a video game machine, with which the user can display, on a screen of a television image receiver, game contents stored in a recording medium such as CD-ROM and enjoy the game through operation with an operational device.

In such entertainment system, the entertainment device and the operational device are generally connected with a serial interface, through which clock signals are sent from the entertainment device, and in synchronous to such clock signals, key switch information corresponded to operation by the user (game player, for example) is sent from the operational device.

Recently, there is developed a system having provided therein a vibration generation means for applying vibration to the user as requested from the external (e.g., entertainment system), so as to allow the system to give various types of vibration to the user in response to the user's operation in progress of games, which has already been put into practical use.

More recently, there is proposed and marketed a video game such that allowing the user to raise game characters displayed on a monitor (simply referred to as "raising game" hereinafter).

In such raising game, the user could only select, from a plurality of game characters, an arbitrary game character which he or she wants to raise, and could not set basic parameters (e.g., appearance, personality) of the characters to be raised.

Thus there has been a problem that the growing process of a certain game character would be almost the same unless otherwise extreme environmental setting or growing condition is provided, which ruins attractive nature of such game.

The conventional raising game is also characterized in that the raising can only enhance the personal ability of the game character, which is typified by the speed-up of the characters motion, growth into a larger body, and gain to a higher level.

So that the user's attempts to enjoy various growth processes by varying the raising way only resulted in changes in the improvement ratio of the ability, where the raising pattern *per se* remains unchanged, which is causative of loosing interest of the user.

Various respective aspects and features of the invention are defined in the appended claims. Features from the dependent claims may be combined with features of the independent claims as appropriate and not merely as explicitly set out in the claims.

The present invention was proposed to address the foregoing problem, and embodiments thereof can provide
a program, recording medium storing such program; program execution system and such program execution device, all of which allow the user to set basic parameters (e.g., appearance, personality) of the game characters to be raised and to enjoy various raising patterns even with the same game character.

Embodiments of the present invention can provide a program, recording medium storing such program; program execution system and such program execution device, all of which allow the user to enjoy, not only changes in a ratio of ability improvement, but also an unprecedented raising pattern in which a game character can become a good or bad fellow depending on the raising way.

The present invention is characterized in that generating game characters based on parameters related at least to the appearance and personality of game characters, where such parameters can be entered according to operational instructions of the user. This allows the user to define by himself or herself basic parameters (appearance, personality, etc.) of the game character to be raised, and to enjoy various raising patterns even if the same game character is to be raised.

The invention will now be described by way of example with reference to the accompanying drawings, throughout which like parts are referred to by like references, and in which:
Fig. 1 is a schematic drawing showing an entertainment system of an embodiment according to the present invention;
Fig. 2 is a block diagram showing a circuit constitution of the entertainment device according to the present embodiment;
Fig. 3 is a drawing of the exemplary game characters thus generated;
Fig. 4 is a flow chart showing character generation processing:
Fig. 5 is an exemplary drawing showing an appearance selection screen;
Fig. 6 is an exemplary drawing showing a language selection screen;
Fig. 7 is an exemplary drawing showing a personality setting screen;
Fig. 8 is a flow chart showing a process flow of character's conversation in a set language;
Fig. 9 is an illustration of an exemplary good fellow character;
Fig. 10 is an illustration of an exemplary bad fellow character;
Fig. 11 is an illustration of an exemplary conduct of the bad fellow character;
Fig. 12 is a first flow chart showing conducts of a generated game character varying in response to the user's correspondence;
Fig. 13 is a second flow chart showing conducts of a generated game character varying in response to the user's correspondence;
Fig. 14 is a flow chart showing a display processing of game character's motion;
Fig. 15 is a flow chart showing a processing for game character's marriage;
Fig. 16 is an illustration showing a flashing display of a game character that attained a marriageable age;
Fig. 17 is an illustration showing a scene of a premarital interview;
Fig. 18 is an illustration showing a scene in which a game character to be married is selected; and
Fig. 19 is an illustration showing a scene in which an egg brakes and an upgraded game character is born.

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

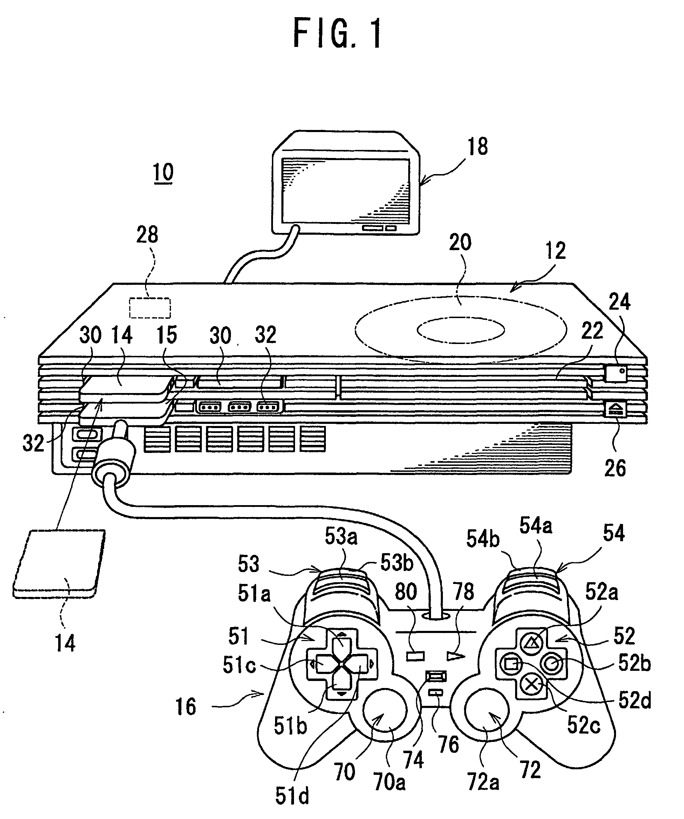

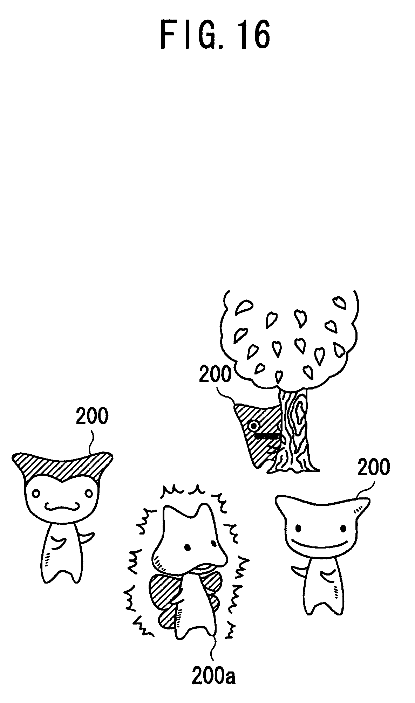

The following paragraphs describe embodiments of the program execution system and program execution device of the present invention applied to an entertainment system, and embodiments of the recording medium and program of the present invention applied to a recording medium, having stored therein programs and data, and a program used by the foregoing entertainment system, referring to Figs. 1 to 19.

An entertainment system **10** according to the present embodiment basically comprises, as shown in Fig. 1, an entertainment device **12** on which various computer programs are executed, a memory card **14** readily detachable to such entertainment device **12,** a controller **16** readily detachable to such entertainment device **12,** and a monitor (display) **18** that is a display device such as a television receiver to which image and sound signals are sent from the entertainment device **12.**

The entertainment device **12** is designed to read computer programs out from a large-capacity recording medium such as an optical disk **20**, for example, CD-ROM or DVD-ROM, and to execute games or the like as being instructed by the user (e.g., game player). Execution of the game in this context now refers to navigating progress of the game while controlling display on the monitor **18** and sound mainly by receiving input through a connector **15** from the controller **16.**

As shown in Fig. 1, the entertainment device **12** is shaped in a stack of flat rectangular parallelepipeds, and the front panel thereof has provided thereon a disk tray **22** which is a disk loading section reciprocally movable forward and backward, and is provided for loading thereon an optical disk **20** as a recording medium storing computer programs or the relevant data; a reset switch **24** for arbitrarily resetting a currently-running computer program or so; an open button **26** for drawing the disk tray **22;** two plug-in sockets **30** for the memory card **14;** and two controller terminals **32** to which the connectors **15** of the controllers **16** can be inserted. The rear panel thereof has provided thereon a power switch **28;** and an AV (audio-visual) multi-output terminal, not shown, that is an image and sound output terminal to which the monitor **18** is connected through an AV cable.

The entertainment device **12** not only exhibits a control function such that reading a computer program out from the optical disk **20,** which is a recording medium such as a CD-ROM and DVD-ROM having stored therein computer programs and data of computer games (video games), and executing such program to thereby display game characters and scenes on the monitor **18,** but also internally has various control functions such as those for reproducing movie from DVD (digital versatile disk) or music from CDDA (compact dick digital audio), which are other types of the optical disk **20.** It still also has a function of executing a computer program downloaded by communication typically through a communication network. During execution of a computer program for video game, three-dimensional computer graphic images generated by the entertainment device **12** are displayed on the monitor **18** as a display device.

In such case, also signals sent from the controller **16** are processed by one of the foregoing functions of the entertainment device **12,** and results of the processing are seeable as motions of the game characters, change of the scenes and so forth on the monitor **18.**

The controller **16** has a first operational portion **51** and a second operational portion **52** on the left and right sides, respectively, from the center on the top plane thereof, has a third operational portion **53** and a fourth operational portion **54** on the lateral plane thereof, and has a left joy stick **70** and a right joy stick **72** for effecting analog operation on the front left and front right sides, respectively, on the top plane thereof.

The first operational portion **51** serves as a press operational portion for adding motion to the game characters or the like displayed typically on the screen of the monitor **18,** whose functions are set typically by a computer program stored in the optical disk **20,** and has four operational keys (directional keys) **51a, 51b, 51c** and **51d** for moving the game characters or the like upward, downward, leftward and rightward. The directional key **51a** is also referred to as an upward key, the directional key **51b** as a downward key, the directional key **51c** as a leftward key, and the directional key **51d** as a rightward key.

The second operational portion **52** has four cylindrical operational buttons **52a, 52b, 52c** and **52d,** the individual of which have on the top portion thereof identification marks of "Δ", "○", "×" and "□", respectively. The individual operational buttons **52a, 52b, 52c** and **52d** are also referred to as Δ button **52a, ○** button **52b,** × button **52c** and □ button **52d,** respectively.

The individual operational buttons **52a** to **52d** in the second operational portion **52** are assigned with the individual functions by a computer program stored in the optical disk **20,** where the functions of the individual operational buttons **52a** to **52d** are such that those for moving the left arm, right arm, left leg and right leg, respectively, of a game character or the like.

The third and fourth operational portions **53** and **54** have almost similar configuration, in which vertically aligned are two operational buttons of an **L1** button **53a** and an **L2** button **53b,** and two operational buttons of an **R1** button **54a** and an **R2** button **54b,** respectively. Also such third and fourth operational portions **53** and **54** are assigned with functions by a computer program stored in the optical disk **20,** which are typically those making the game characters to perform specific motions.

The left and right joy sticks **70** and **72** are respectively provided with a signal input element which typically comprises a variable resister rotatable 360° around an axis of operation. Such left and right joy sticks **70** and **72** are designed to output analog values corresponding to the amount of inclinational operation thereof, and to return back to the individual neutral positions when released as being energized by elastic members not shown. The left and right joy sticks **70** and **72** can also output other signals when being pressed down, where such signals differ from the analog values output in association to the inclinational operation. That is, the left and right joy sticks **70** and **72** have functions of an **L3** button **70a** and **R3** button **72a,** which can be assumed as a fifth and sixth operational portions.

By rotating and inclining the left and right joy sticks **70** and **72,** the user can enter instruction signals for effecting analog motions, such as typically moving the characters while rotating them, moving them while varying the speed, and changing the status thereof.

The left and right joy sticks **70** and **72** shown in Fig. 1 are available by being switched from the first and second operational portions **51** and **52**. The switching can be effected by using an analog mode switch **74.** By selecting the left and right joy sticks **70** and **72** using such analog mode switch **74,** an indicator **76** lights on to thereby inform the user of the selection of such left and right joy sticks **70** and **72.**

The controller **16** is also provided with a start button (start switch) **78** for prompting start of games or the like, and a selection button **80** (selection switch) for selecting difficulty level of games at the start thereof.

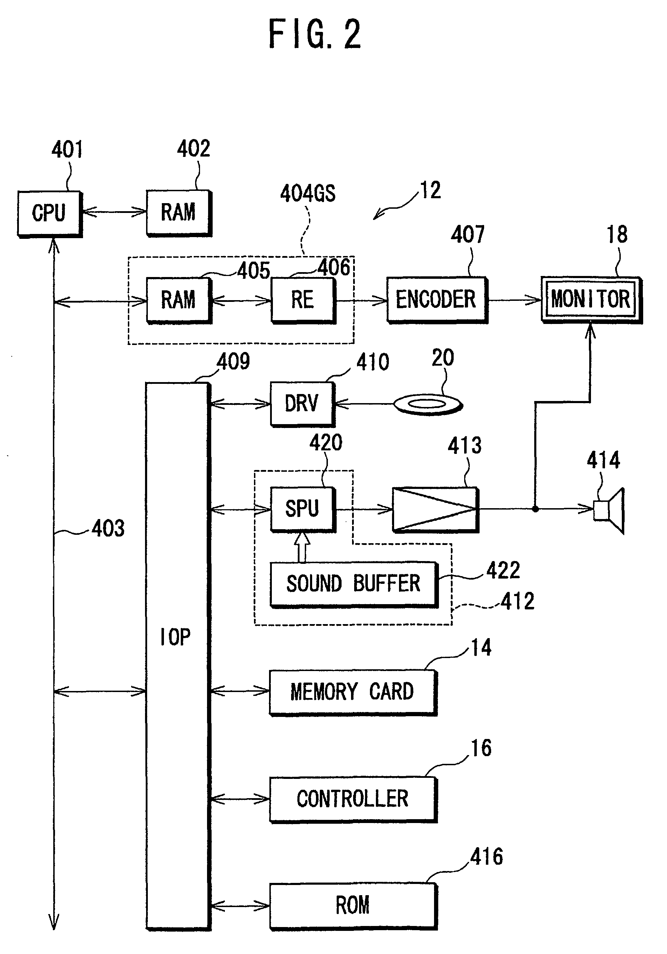

The internal configuration and general operation of the entertainment device **12** shown in Fig. 1 will be explained referring to the block diagram in Fig. 2.

In the entertainment device **12,** a RAM **402** as a semiconductor memory and a bus **403** are connected to a CPU **401** for controlling such entertainment device **12.**

To the bus **403,** a graphic synthesizer (GS) **404** and an input/output processor (IOP) **409** are respectively connected. The GS **404** includes an RAM (image memory) **405** containing therein a frame buffer, a Z buffer and a texture memory, and a rendering engine **406** having a rendering function including a drawing function of drawing into a frame buffer of the image memory **405.**

To thus-composed GS **404,** a monitor **18** as an external device is connected through, for example, an encoder **407** which is responsible for converting digital RGB signals or so to NTSC standard television signals.

To the IOP **409,** connected are a driver **410** for reproducing and decoding data recorded in the optical disk **20,** a sound producing system **412,** a memory card **14** as an external memory comprising a flash memory, the controller **16,** and an ROM **416** having recorded therein an operating system and the like. The sound producing system **412** is connected through an amplifier **413** to a speaker **414** and the monitor **18** as the external devices to thereby supply sound signals.

The sound producing system **412** has a sound processing unit (SPU) **420** for generating music sound and effective sound in accordance with the instruction made by the CPU **401,** and a sound buffer **422** for storing such music sound and effective sound generated from the SPU **420.** The music signal and effective sound signals generated from the SPU **420** are supplied to an audio terminal of the speaker **414** or monitor **18,** and are then emitted from such speaker **414** and monitor **18** as music sound and effective sound.

The SPU **420** is provided with an ADPCM (adaptive differential PCM) decoding function for reproducing sound data which was obtained after processing 16-bit sound data as 4-bit differential signals by adaptive differential PCM, a reproduction function for reproducing waveform data stored in the sound buffer **422** to thereby emit effective sound or the like, and a modulation function for modulating and reproducing waveform data stored in the sound buffer **422.**

Being provided with such functions, the sound producing system **412** is available as a so-called sampling sound source which emits musical sound and effective sound based on the waveform data recorded in the sound buffer **422** while being instructed by the CPU **401.**

The memory card **14** is a card-type external memory device typically comprising a CPU, or a gate array with a flash memory, and designed to be readily attachable or detachable to or from the entertainment device **12** through a socket **30** provided thereon so as to store intermediate status of the game or a program for reproducing DVDs.

The controller **16** is a device for giving instruction (binary instruction or many valued instruction) to the entertainment device **12** upon being pressed on a plurality of buttons provided thereon. The driver **410** is provided with a decoder for decoding images encoded based on MPEG (moving picture experts group).

Next paragraphs will describe how images are displayed on the monitor **18** while being controlled through the controller **16.** The following description stands on the basis that object data comprising polygon apex data, texture data, etc. stored in the optical disk **20** are already read out through the driver **410** and stored into the RAM **402** in the CPU **401.**

When a user's instruction is entered through the controller **16** to the entertainment device **12,** the CPU **401** calculates a three-dimensional position of an object and an orientation thereof relative to a viewpoint based on such instruction. This alters polygon apex data of the object defined by a (X, Y, Z) coordinate value in an orthogonal tri-axial system. The altered polygon apex data are converted by transparent conversion into two-dimensional coordinate data.

An area specified by the two-dimensional coordinate is a so-called polygon. The two-dimensional coordinate data after the alteration, Z data and texture data are supplied to the GS **404**. The GS **404** then performs drawing processing by executing rendering based on such altered two-dimensional coordinate data and Z data, and writing (drawing) the texture data serially in the RAM **405** (image memory, herein) as a memory. The texture data drawn herein are supplied to the monitor **18** after one frame of image completed by such drawing is encoded by the encoder **407,** and displayed thereon as an image.

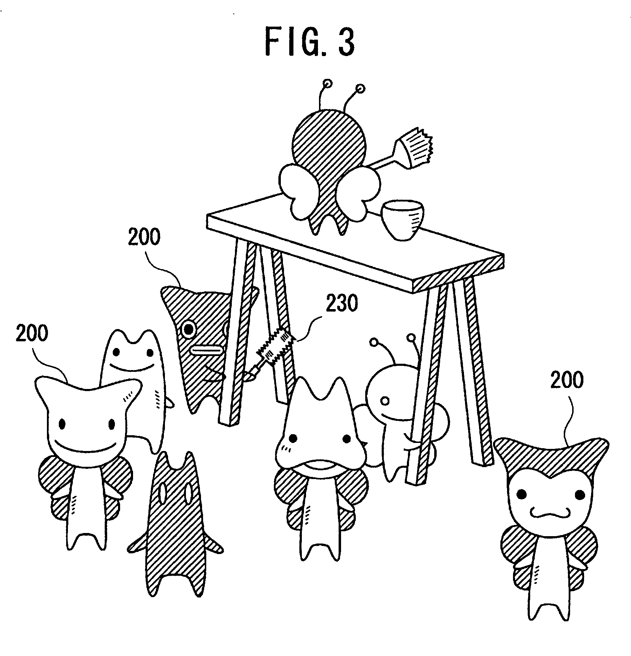

Next, characteristic functions of the entertainment system according to the present embodiment will be described referring to Figs. 3 to 19.

A first function is such that generating a game character to be raised based on at least appearance and personality parameters entered according to the operational instruction from the user. For example as shown in Fig. 3, the game character **200** to be raised is such that enjoying various conversation with the user or playing with other game characters **200.**

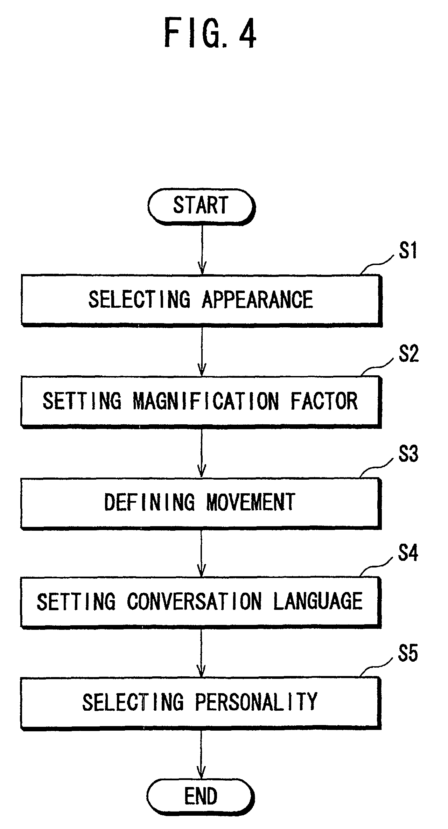

A method of generating the game character **200** will be explained referring to Figs. 4 to 7.

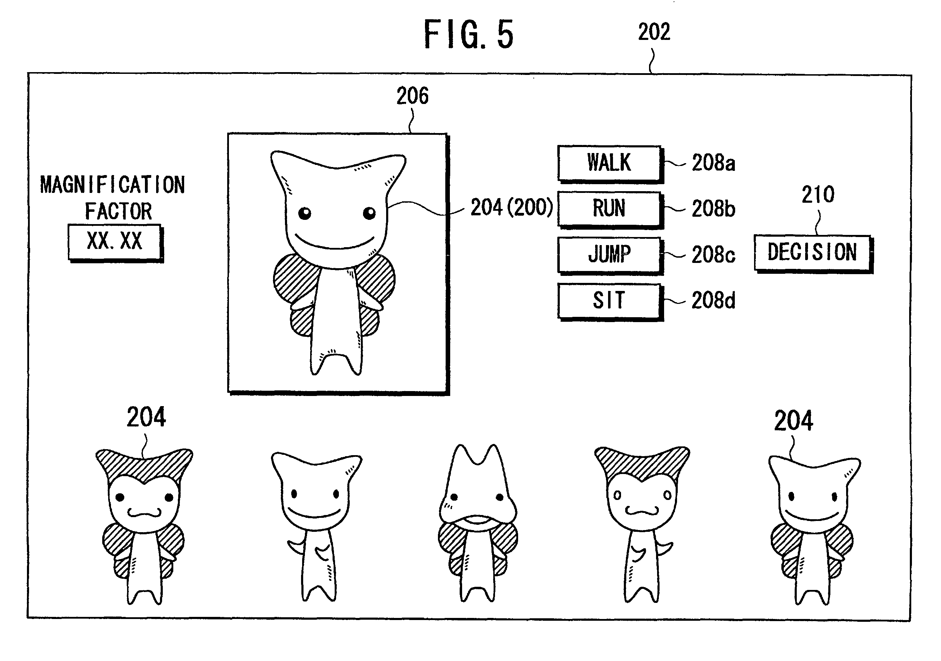

In step **S1** in Fig. 4, the user selects an appearance of the game character **200** which he or she wants to raise. Such selection of the appearance is performed using an appearance selection screen **202** shown in Fig. 5. The appearance selection screen **202** includes a plurality of appearances **204** (ready-made appearances or user's original appearances), a window **206** for previewing the selected appearance **204** in an arbitrary magnification factor, and a plurality of motion selection icons **208a** to **208d** for defining several motions to be exhibited by such selected appearance **204.**

The user first selects any one appearance **204** from a plurality of displayed appearances **204.** The selected appearance **204** is shown in the window **206.** By properly altering the magnification factor in step **S2** in Fig. 4, the selected appearance **204** will be enlarged or shrunk corresponding with such magnification factor.

Next in step **S3** in Fig. 4, the user confirms motion of the game character. The confirmation is enabled by operating (clicking) an arbitrary icon of a plurality of motion selection icons **208a** to **208d** displayed in the appearance selection screen **202.**

For example, operation of the "Walk" icon **208a** will result in motion display in which only the game character **200** having selected therefor the appearance **204** will walk. Such motion pattern of "Walk" is provided typically with four options, which can serially be toggled by operating such icon **208a.** The user can determine a desired walking motion of the game character **200** by operating a Decision icon **210** when his or her favorite motion is displayed.

The user can also determine the individual motions of "Run", "Jump" and "Sit" similarly by operating the corresponded icons **208b, 208c** and **208d** and by operating the "Decision" icon **210.**

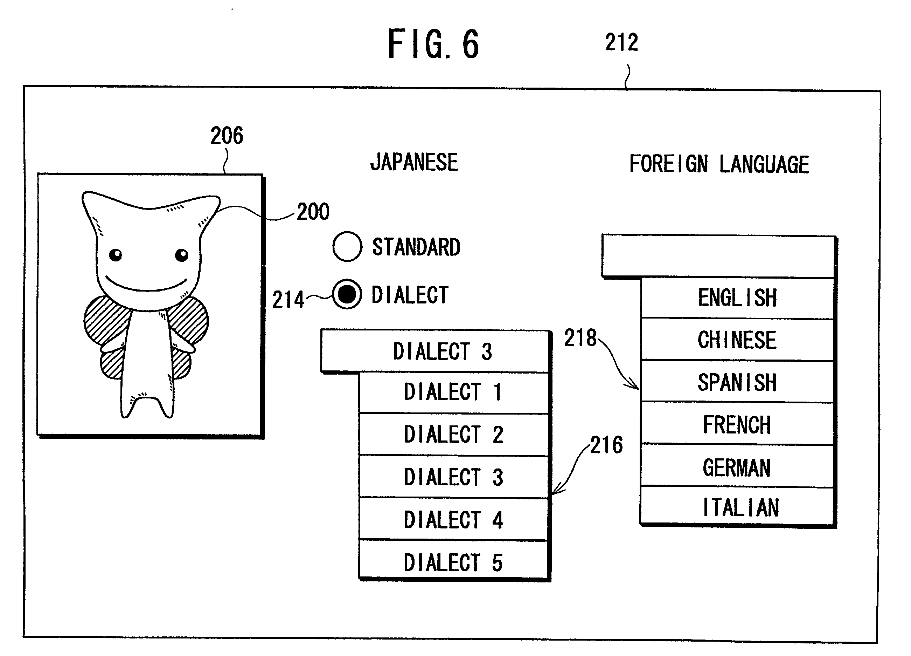

Next in step **S4** in Fig. 4, the user sets a conversation language spoken by the game character **200.** Such setting is accessible by displaying a language setting screen **212** shown in Fig. 6.

The language setting screen **212** is divided into columns for Japanese and foreign languages. The Japanese column is further divided into standard accent and dialect, and a selection mark **214** is displayed for either of which is selected by the user. When the dialect is selected, contents **216** thereof will appear. Fig. 6 shows an exemplary case in which the dialect and dialect 3 included therein were selected. On the other hand, the foreign language column is provided with content **218** of representative languages spoken by the game character **200.**

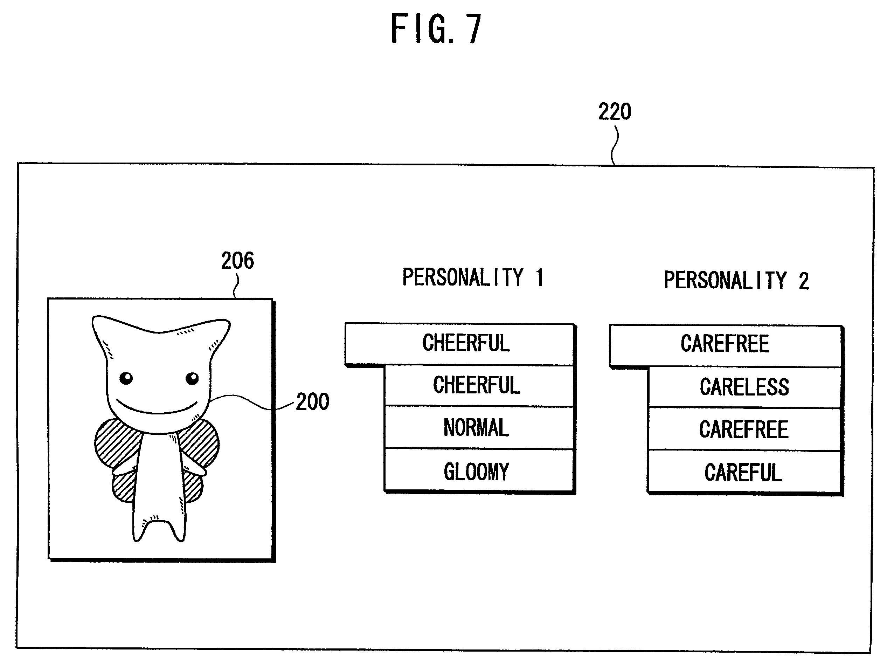

Next in step **S5** in Fig. 4, the user defines a personality of the game character **200.** Such setting is accessible by displaying a personality setting screen **220** shown in Fig. 7.

The personality setting screen **220** allows the user to set two types of the personality (personality **1** and personality **2).** Personality **1** typically comprises "Cheerful", "Normal" and "Gloomy", and personality **2** typically comprises "Careless", "Carefree" and "Careful", where only one of the individual personalities is selectable. Fig. 7 shows an exemplary case in which "Cheerful" is selected as personality **1**, and "Carefree" is selected as personality **2.**

The character generation processing is completed when the personality setting for the game character ends in step **S5.**

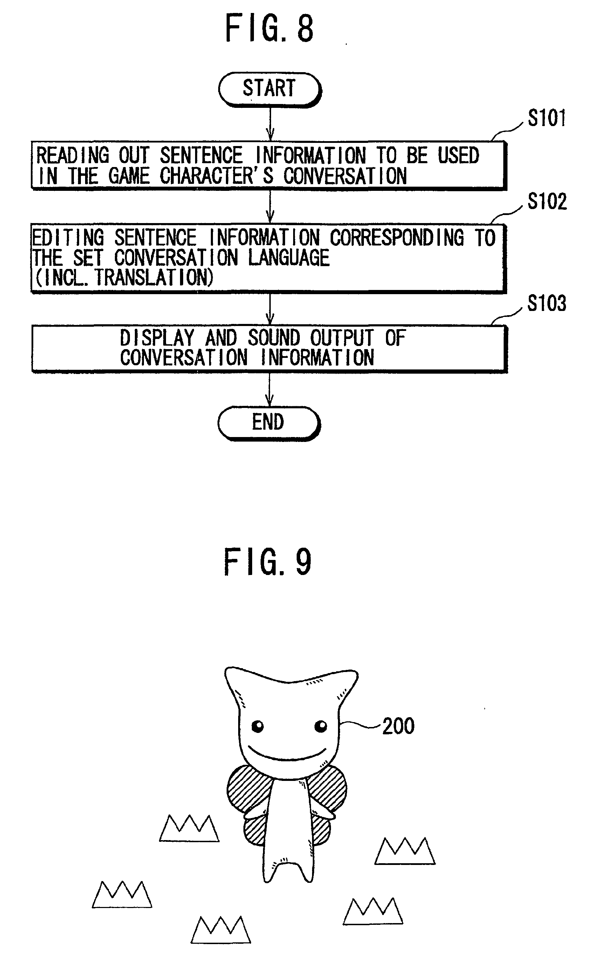

Conversation processing of the game character based on the foregoing conversation language proceeds as shown in Fig. 8.

In step **S101** in Fig. 8, the entertainment device **12** reads out sentence information (keywords, etc.) spoken by the game character **200.** The sentence information can be those extracted from information received via a network.

Thereafter in step **S102,** the entertainment device **12** edits the sentence information according to the set conversation language, to thereby generate conversation information. For the case a foreign language is selected, such editing includes translation. For the case Japanese is selected, the editing includes modification of the inflection or the like specific to the selected dialect.

Then in step **S103,** the entertainment device **12** displays the conversation information generated by such editing on the screen of the monitor **18.** Sound output is concomitantly available from the sound producing system **412.**

A second function is such that setting at least conducts of the game character **200** displayed on the monitor **18** according to a user' s operational instruction associated with an event occurred when one or more game characters **200** displayed on the monitor **18** is to be raised.

The following paragraphs specifically describe user's processing during the raising of the generated game character **200,** and in particular processing by which the conducts of the game character **200** vary depending on the user's response thereto.

The game character **200** generated depending on the parameter setting by the user tries to attract users attention by talking thereto or requesting a present. When the user friendly responses to the game character **200** or give some presents thereto, the game character grows up as a good fellow as shown in Fig. 9. Such raising of course results in upgraded personal ability of the game character **200** similarly to the conventional case, which is typified by swifter motion, larger body or improved level.

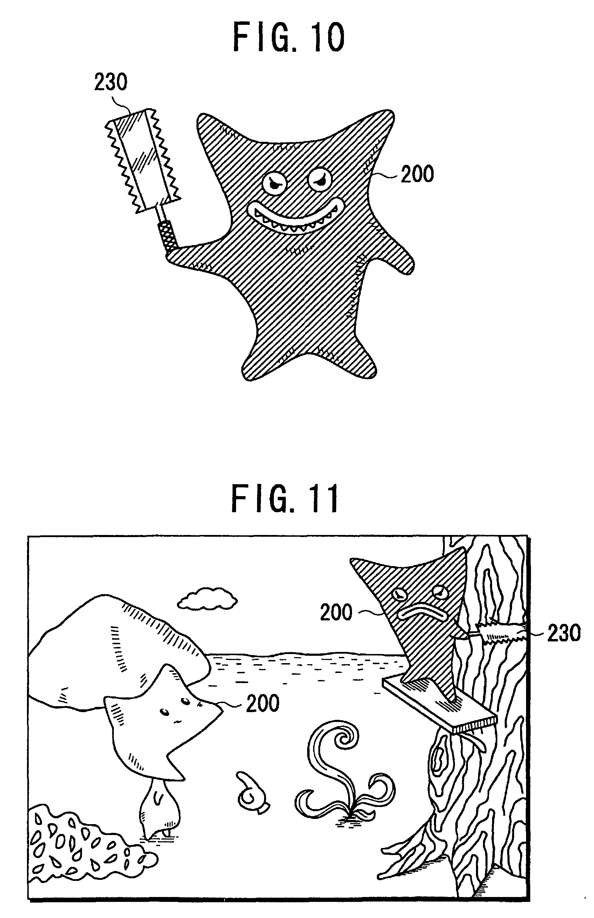

On the contrary, if the user does not respond to the talking of the game character **200** or does not give any presents, the game character grows up as a bad fellow as shown in Fig. 10.

Briefly, difference between the game characters **200** grown up as a good fellow (simply referred to as a good character) and a bad fellow (simply referred to as a bad character) is such that the good character **200** acts friendly and talks much to the user, whereas the bad character **200** takes a hostile attitude toward the user and does mischief such as painting or destroying everything around with a saw **230** as shown in Fig. 3 and 11.

Such motion patterns can be attained by previously arranging motion data file groups for the good character and bad character. The individual data file groups have a number of motion data files, and such motion data files are grouped by a plurality of appearances, and are assigned to every personality. For example, when a cheerful and careless personality is set, a motion corresponded to such personality and specific to the foregoing good character or bad character will be displayed.

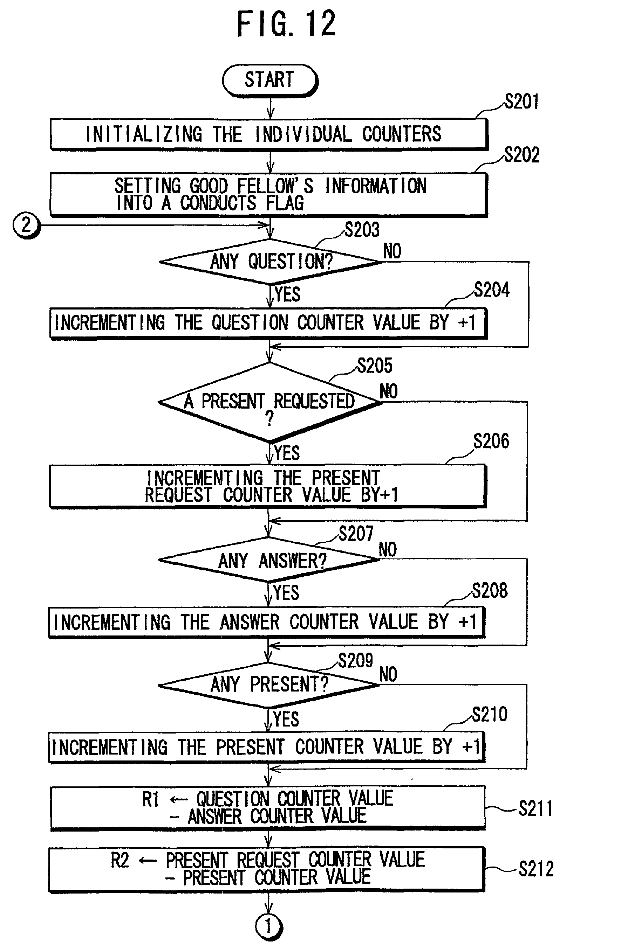

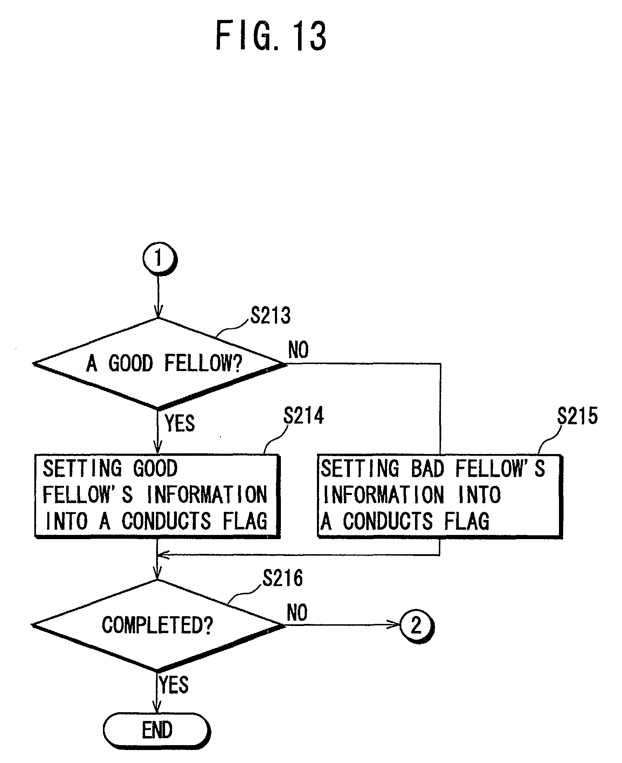

Processing during the raising of the game character **200** by the user will now be explained referring to flow charts in Figs. 12 and 13.

First in step **S201** in Fig. 12, the entertainment device **12** stores initial value "0" respectively into a question counter for counting number of times of asking question, a present request counter for counting number of times of requesting a present, an answer counter for counting number of times of answering the question, and a present counter for counting number of times of giving a present, to thereby initialize such question counter, present request counter, answer counter and present counter.

Next in step **S202,** the entertainment device **12** sets good character's information to a conduct flag. Then in step **S203,** the entertainment device **12** discriminates whether any question is submitted by the game character **200,** and if yes, the process advances to step **S204,** where the entertainment device **12** increments the value of the question counter by +1.

Next, in step **S205,** the entertainment device **12** discriminates whether any request for a present is submitted by the game character **200,** and if yes, the process advances to step **S206,** where the entertainment device **12** increments the value of the present request counter by +1.

Next, in step **S207,** the entertainment device **12** discriminates whether the user answered to the question of the game character **200,** and if yes, the process step advances to step **S208,** where the entertainment device **12** increments the value of the answer counter by +1.

Next, in step **S209,** the entertainment device **12** discriminates whether a present was given in response to the present request of the game character **200,** and if yes, the process step advances to step **S210,** where the entertainment device **12** increments the value of the present counter by +1.

Next, in step **S211,** the entertainment device **12** calculates difference between values of the question counter and the answer counter, which is followed by storing the result into register **R1,** and then in step **S212,** calculates difference between values of the present request counter and present counter, which is followed by storing the result into register **R2.**

Next, in step **S213** in Fig. 13, the entertainment device **12** discriminates whether the game character **200** satisfies conditions of a good character. The discrimination is typically based on whether a value of the register **R1** is smaller than a predetermined value "A", and a value of the register **R2** is smaller than a predetermined value "B".

That is, in such exemplary case, the entertainment device **12** determines the game character **200** as a good character if number of times not answering the question of the game character **200** is smaller than the predetermined value "A", and number of times not giving a present in response to the request from the game character **200** is smaller than the predetermined value "B".

If the conditions for the good character are satisfied, the process advances to the next step **S214,** where the entertainment device **12** sets information expressing the good character to the conduct flag. On the other hand, if the conditions for the good character was not found to be satisfied, the process advances to step **S215,** where the entertainment device **12** sets information expressing the bad character to the conduct flag.

When the process in steps **S214** or **S215** is completed, the process then advances to step **S216,** where the entertainment device **12** discriminates whether the end request for the raising processing is issued or not. If no end request is detected, the process returns to step **S203,** where the entertainment device **12** repeats the processing of step **S203** and thereafter.

Upon detection of the end request in step **S216,** the raising processing, in particular the discrimination of good and bad characters, comes to the end.

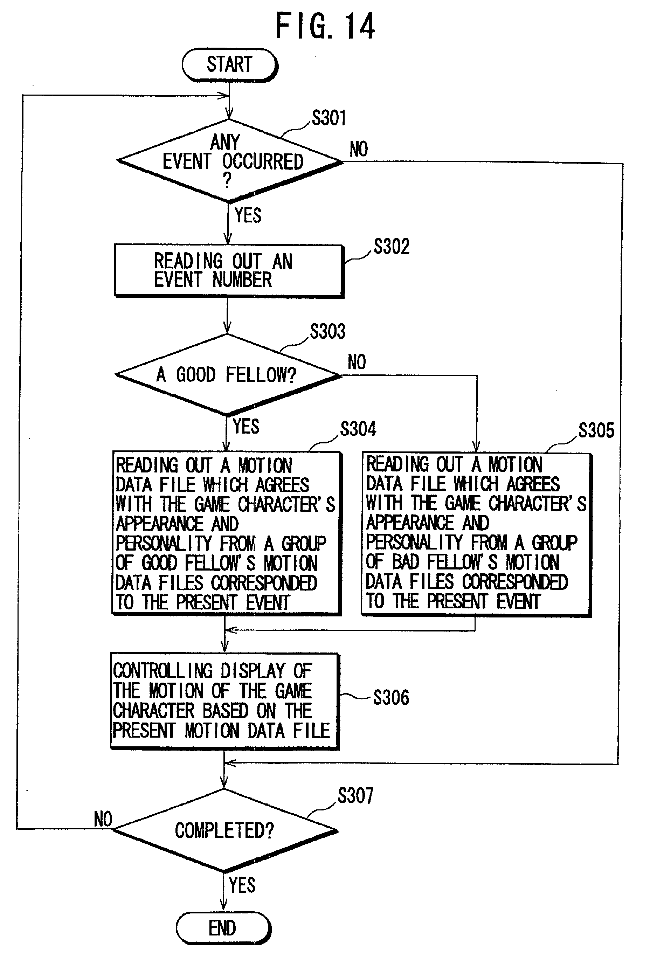

Next paragraphs will describe the processing for displaying motion of the game character **200** (motion display processing) referring to the flow chart shown in Fig. 14.

In step **S301** in Fig. 14, the entertainment device **12** discriminates whether any event occurred or not. If some events were found to occur, the process advances to the next step **S302,** where the entertainment device **12** reads out the number of the generated event (event number).

Next in step **S303,** the entertainment device **12** discriminates whether the game character **200** is a good character or not. The discrimination is based on the information set into the conduct flag (information for expressing good or bad character).

If the game character **200** was found to be a good character, the process advances to the next step **S304,** where the entertainment device **12** reads out a motion data file which agrees with the set appearance and personality from the motion data file groups for the good character corresponded to the current event number.

On the other hand, if the game character **200** was found to be a bad character, the process advances to step **S305,** where the entertainment device **12** reads out a motion data file which agrees with the set appearance and personality from the motion data file groups for the bad character corresponded to the current event number.

Upon completion of the processing in step **S304** or **S305,** the process advances to step **S306,** where the entertainment device **12** displays motion of the game character **200** based on such current motion data file.

Next, in step **S307,** the entertainment device **12** discriminates whether the end request for the motion display processing is issued or not. If no end request is detected, the process returns to step **S301,** where the entertainment device **12** repeats the processing of step **S301** and thereafter.

Upon detection of the end request in step **S307,** the motion display processing comes to the end.

Now in such raising of the game character according to the operational instruction by the user, it is also possible to marry one game character **200** to another game character **200** so as to obtain a new game character **200A** having an improved level.

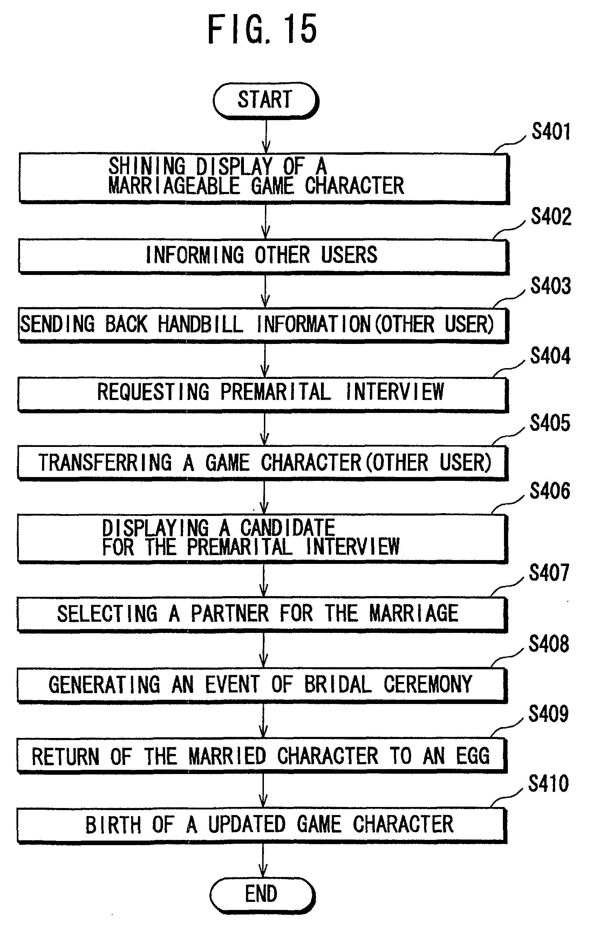

The processing for character's marriage will be described referring to Figs. 15 to 19. First in step **S401** in Fig. 15, the entertainment device **12** allows, from a plurality of game characters **200,** one game character **200a** who attained a marriageable age to shine. The marriageable age can be discriminated whether a predetermined time period (e.g., three months) has elapsed or not since the game character **200** was generated. Such flashing display of the game character **200a** allows the user to recognize at a glance that which game character **200** attained a marriageable age.

Next in step **S402** in Fig. 15, the entertainment device **12** announces to the other users through the network the presence of a game character **200a** in the marriageable age. Such announcement may be e-mailed in a general manner, or may be transmitted in a form of image information (handbill information) having a handbill-like style with a portrait and profile of the game character. It is also allowable to use a special messenger character haunting among the users through the network.

Next in step **S403,** the other users select, from several game characters under the raising, one game character **200** for whom they want to arrange marriage, and then return to the sender, for example, image information (handbill information) having a handbill-like style with a portrait and profile of the game character as described in the above.

Next in step **S404,** the user observes the returned handbill information, selects desirable game characters **200,** and then makes an offer of premarital interview to the users who are raising the selected game characters **200** by an e-mail or handbill information.

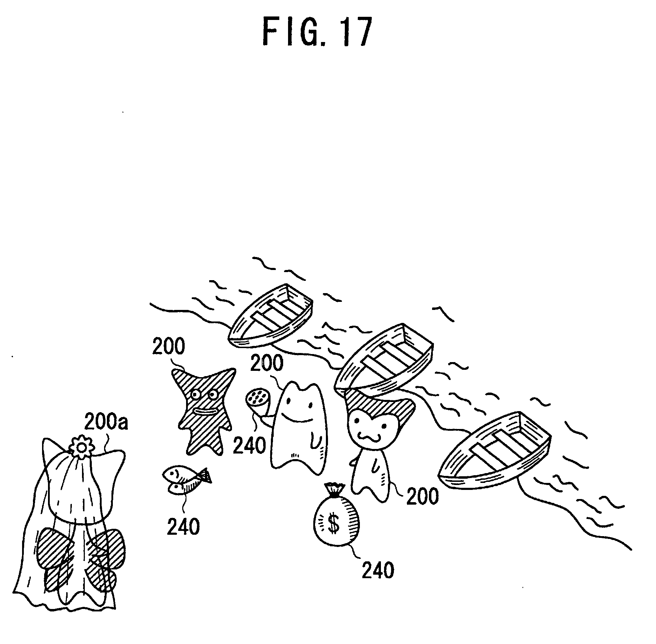

Next in step **S405,** the users who received the offer of the premarital interview transfer the respective selected game characters **200** under raising with tributes **240** (see Fig. 17). A practical processing is such that sending parameter information of the game characters **200** and numeral information of the tributes **240,** rather than sending image information of the game characters **200.**

Next in step **S406,** after being sent with the parameter information of the game characters **200** and the numeral information of the tributes **240** through the network, the entertainment device **12** generates game characters **200** identical to the game characters **200** to be interviewed based on the received parameter information, which are displayed on the monitor **18,** and reads out the image information of the tributes **240** corresponded to the numeral information, which are also displayed on the monitor **18.**

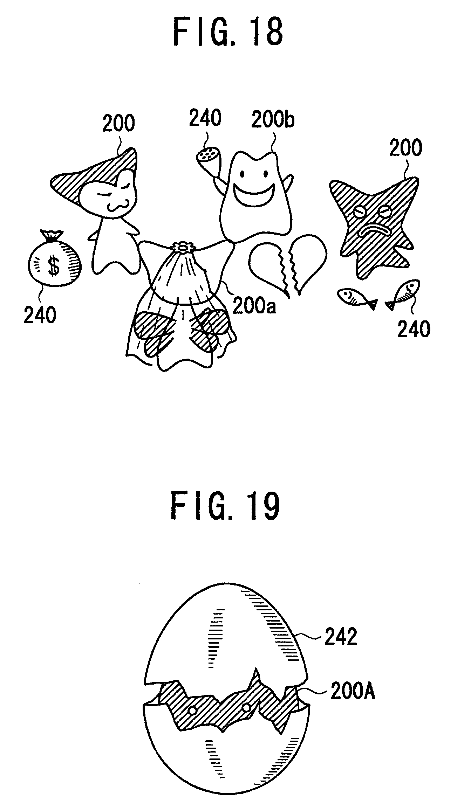

Next in step **S407,** the user requested the premarital interview selects either one of the game characters **200** desirable for the marriage from those appeared with the tributes **240** as shown in Fig. 18. Such selection may be effected by the user through pointing the desirable character **200** with the cursor (not shown) and clicking, or may be effected in a displayed scene in which the game character **200a** in a marriageable age selects a game character **200b** corresponded to a generated random number. It is also allowable to show a scene in which the unselected game characters **200** go back to where they were while acting as being disappointed.

Next in step **S408,** a bridal event occurs. It is also allowable to combine such event with another event in which a number of game characters **200** are displayed to bless the marriage.

Next in step **S409,** the entertainment device **12** displays a scene in which the married game characters **200a** and **200b** return to an egg and go back to the individual users. That is, the entertainment device **12** displays a scene in which the character **200a** returns to the egg on the monitor **18** of the user who requested the premarital interview, and displays a scene in which the egg comes back on the monitor **18** of the user who sent the game character **200b.**

Next in step **S410,** the entertainment device **12** displays a scene in which the egg **242** breaks and an upgraded game character **200A** is born, as shown in Fig. 19. The event of marriage is completed in such stage.

As has been described in the above, the entertainment device **12** according to the present embodiment can generate the game character **200** by the game character generation processing based on at least on the appearance and personality parameters of such game character **200** entered according to the user's operational instruction.

This allows the user to define by himself or herself basic parameters (appearance, personality, etc.) of the game character **200** to be raised, and to enjoy various raising patterns even if the same game character **200** is to be raised.

In particular, since the system is designed so as to display the appearance selection screen **202** in which one appearance **204** selected from a plurality of appearances **204** is shown, the motion selection icons **208a** to **208d** for defining motion for the selected appearance **204,** the personality setting screen **220** for setting personality of the game character **200** having the appearance **204** already selected, and the language setting screen **212** for setting conversation language for such game character **200,** so that the user can readily set the basic parameters of the game character **200** to be raised, and can readily generate various game characters **200.**

In the character raising processing for raising one or more characters **200** displayed on the monitor **18** in the present embodiment, at least conducts of such game character **200** can be set according to the operational instruction by the user in association to a generated event.

This allows the user to enjoy, not only changes in a ratio of ability improvement, but also an unprecedented raising pattern in which a game character **200** can become a good or bad fellow depending on the raising method.

In particular, since the system is designed so as to generate an event of virtual marriage of the game characters **200** under raising by the user and another user via network, so that the individual users can feel more familiar to their game characters under raising and can enjoy conversation with such game characters.

In addition, conducts (a good fellow or a bad fellow) and/or marriage condition such as marriageable age and matching of the game character can be modified based on appearance and personality parameters of the game character set by the user.

This allows the user to generate much variety of game characters. And further, by making the rule that the character tends to be a bad fellow if the user set the parameters to a game character which is considered preferable, for example, it becomes possible to let the user set the parameters more carefully and realize a high gameness.

According to the present embodiment, the user can enjoy a raising game without loosing the interest.

The embodiment described in the above is only part of the examples of the present invention. It is therefore to be understood that the recording medium, program, program execution system and program execution device of the present invention may be practiced in any modifications depending on the design or the like otherwise than as specifically described herein without departing from the scope and the technical spirit thereof.

## Claims

1. A recording medium having recorded therein a program and data used on a program execution system which comprises a program execution device for executing various programs, at least one operational device for allowing a user to enter an operation request as an operational instruction into the program execution device, and a display device for displaying an image output from the program execution device;
wherein the program comprises a step of generating a virtual game character based at least on appearance and personality parameters of the virtual game character entered according to the operational instruction by the user.

2. The recording medium according to Claim 1, wherein the step for generating the virtual game character comprises a step of displaying an appearance selection screen for displaying one appearance selected from a plurality of appearances, and motion selection icons for allowing the virtual game character having a selected appearance to move.

3. The recording medium according to Claim 1 or 2, wherein the program further comprises a step of displaying a personality setting screen for the virtual game character for which at least the appearance was selected.

4. The recording medium according to Claim 1, 2 or 3, wherein the program further comprises a step of displaying a screen for setting a conversation language for the virtual game character for which at least the appearance was selected.

5. A recording medium having recorded therein a program and data used on a program execution system which comprises a program execution device for executing various programs, at least one operational device for allowing a user to enter an operation request as an operational instruction into the program execution device, and a display device for displaying an image output from the program execution device;
wherein the program comprises a step of raising one or more virtual game characters displayed on the display device; and
the character raising step comprises a step of setting at least conducts of the virtual game character displayed on the display device based on the operational instruction by the user corresponding to a generated event.

6. The recording medium according to Claim 5, wherein the character raising step further comprises a step of determining motion of the virtual game character based on the set conduct information.

7. The recording medium according to Claim 5 or 6, wherein the character raising step further comprises a step of generating an event for virtually marrying, through a network, the virtual game character under raising by the user to another virtual game character under raising by another user.

8. The recording medium according to Claim 7, wherein the step for generating an event comprises a step of informing the user of a virtual game character who attained the marriageable age from one or more virtual game characters.

9. The recording medium according to Claim 7 or 8, wherein the step for generating an event comprises a step of generating an event for arranging a premarital interview between the virtual game character raised by the user and another virtual game character raised by another user.

10. A computer-readable and -executable program used on a program execution system which comprising a program execution device for executing various programs, at least one operational device for allowing a user to enter an operation request into the program execution device, and a display device for displaying an image output from the program execution device;
wherein the program comprises a step of generating a virtual game character based at least on appearance and personality parameters of the virtual game character entered according to an operational instruction by the user.

11. A computer-readable and -executable program used on a program execution system which comprises a program execution device for executing various programs, at least one operational device for allowing a user to enter an operation request into the program execution device, and a display device for displaying an image output from the program execution device;
wherein the program comprises a step of raising one or more virtual game characters displayed on the display device; and
the character raising step comprises a step of setting at least conducts of the virtual game character displayed on the display device based on an operational instruction by the user corresponding to a generated event.

12. A program execution system comprising a program execution device for executing various programs, at least one operational device for allowing a user to enter an operation request as an operational instruction into the program execution device, and a display device for displaying an image output from the program execution device;
wherein the program to be executed on the program execution device comprises a step of generating a virtual game character based at least on appearance and personality parameters of the virtual game character entered according to the operational instruction by the user.

13. A program execution system comprising a program execution device for executing various programs, at least one operational device for allowing a user to enter an operation request as an operational instruction into the program execution device, and a display device for displaying an image output from the program execution device;
wherein the program comprises a step of raising one or more virtual game characters displayed on the display device; and
the character raising step comprises a step of setting at least conducts of the virtual game character displayed on the display device based on the operational instruction by the user corresponding to a generated event.

14. A program execution device for executing various programs, to which an operational device for outputting user's operation request and a display device for displaying images are connectable;
wherein the program comprises a step of generating a virtual game character based at least on appearance and personality parameters of the virtual game character entered according to an operational instruction by such user.

15. A program execution device for executing various programs, to which an operational device for outputting user's operation request and a display device for displaying images are connectable;
wherein the program comprises a step of raising one or more virtual game characters displayed on the display device; and
the character raising step comprises a step of setting at least conducts of the virtual game character displayed on the display device based on an operational instruction by the user corresponding to a generated event.
